Europäisches Patentamt

European Patent Office    (11) Publication number: **0 021 198**
**A2**
Office européen des brevets

(19)

(12)    # EUROPEAN PATENT APPLICATION

(21) Application number: **80103166.7**          (51) Int. Cl.³: **A 22 B 5/16**

(22) Date of filing: **06.06.80**

(30) Priority: **05.06.79 NZ 190638**

(71) Applicant: **The Meat Industry Research Institute of New Zealand, Inc., East Street, Hamilton (NZ)**

(72) Inventor: **Hand, Richard James, 27 Normandy Avenue, Hamilton (NZ)**
Inventor: **Gilbert, Kevin Victor, 8 Newport Place, Hamilton (NZ)**
Inventor: **Garnett, Kenneth Jasper, 56 Godden Crescent, Auckland (NZ)**

(43) Date of publication of application: **07.01.81 Bulletin 81/1**

(74) Representative: **Sajda, Wolf E., Dipl.-Phys. et al, Patentanwälte Dipl.-Ing. Dipl.-Wirt.-Ing. Dr. Eugen Popp Dipl.-Phys. Wolg E. Sajda Maria-Theresia-Str. 30 Postfach 86 06 24, D-8000 München 80 (DE)**

(84) Designated Contracting States: **DE FR GB IT NL**

(54)    A hide pulling process and pulsator unit therefor.

(57)    A hide pulling process in which a carcass (A) is supported and the hide mechanically pulled therefrom. During the process of pulling the hide from the carcass (A) the carcass (A) is contacted by a pair of spaced apart electrodes (10, 11). Whilst the electrodes (10, 11) are in contact with the carcass (A) a pulsed electric current is passed therebetween.

In a preferred form of the invention the pulsed electric current lies in the range of 5–30 pulses per second. The alternate pulses of the pulsed current can be reversed in polarity.

EP 0 021 198 A2

- 1 -

<u>IMPROVEMENTS IN AND RELATING TO</u>     TITLE MODIFIED
<u>HIDE PULLING PROCESSES</u>         **see front page**

This invention relates to a hide pulling process where the hide of livestock carcasses such as beef, cows, steers, calves, sheep, hogs and the like are mechanically removed. More particularly the invention relates to a process which involves the use of electrical stimulation of a carcass during the mechanical removal of the hide therefrom.

Various mechanical devices have been developed to perform the hide removal process which has traditionally been accomplished manually. During such mechanical hide removal the hide is pulled from the carcass and forces are set up which are sufficient to be able to break the back of the carcass by dislocation of the vertebrae. As a result the commercial value of the carcass is decreased.

To overcome this problem a method of electrical stimulation of the muscles of the carcass has been devised so that the carcass becomes substantially rigid and can withstand the forces set up during at least part of hide pulling process. According to this process electrodes are inserted into the carcass at spaced apart locations during the pulling procedure. (See New Zealand Patent Specification No 157112). The use of force transducers and strain gauges during such a hide pulling process reveals that the duration of forces sufficient to dislocate the back of the carcass is much longer than the tensioning which is afforded by the use of 50-60 Hz or even direct current stimulation of the muscles.

As a result, even when using 50 Hz or 60 Hz current, the mechanical pulling of the hide can result in a proportion of carcasses having dislocated vertebrae.

The present invention has as its object to provide an improved hide pulling process wherein the incidence of carcass damage by having dislocated vertebrae as a result of the pulling process is minimized.

This object is achieved by employing a pulsed stimulation current. This produces the same tension in the muscles as known processes, but gives a four to five fold increase in the duration for which the tension is maintained. This allows greater flexibility in the pulling operation and virtually eliminates broken or dislocated vertebrae.

The invention thus broadly provides a hide pulling process which includes the step of contacting the carcass with a pair of spaced apart electrodes and passing a pulsed electric current between the electrodes.

—— In a preferred form the pulsed electric current lies in the range of 5-30 pulses per second with alternate pulses being reversed in polarity. The pulsed current can be of substantially 14.28 pulses per second and is derived from a 50 Hz mains supply or 17.14 pulses per second from a 60Hz mains supply.

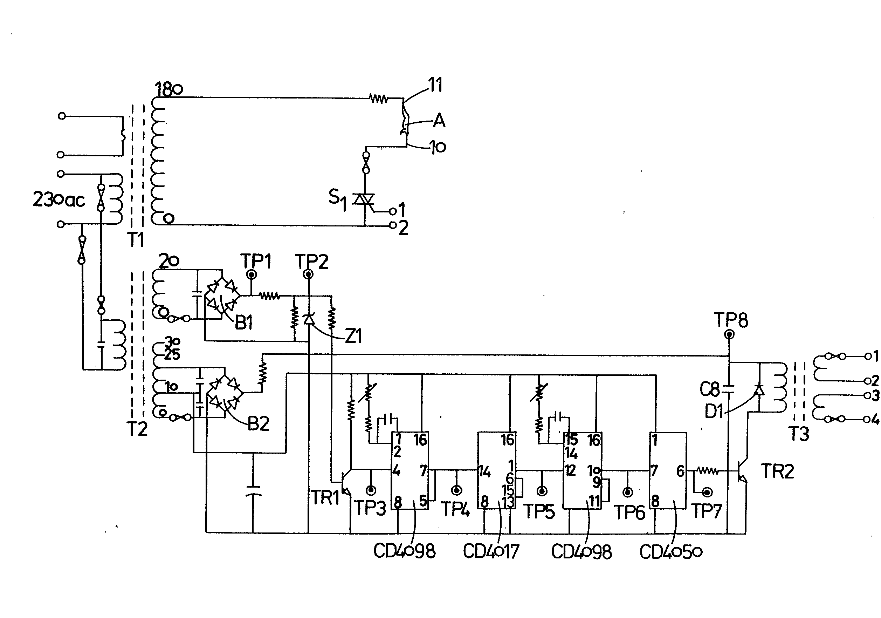

To more fully describe the invention reference will be made to the accompanying drawing which is a circuit diagram of a pulsation unit which is suitable for use in the process according to the invention.

With the pulsator unit represented in the drawing the pulses of the supply are counted and predetermined half waves are selected and switched to the output. The selection of every seventh half-wave from a 50 Hz mains supply gives a frequency of 14.28 pulses per second. This has been shown to give excellent results with a minimum number of broken backs. The alternate pulses preferably reverse in polarity to avoid polarization and transformer core saturation. In addition heating and cooking problems at the points at which the electrodes are inserted into the carcass are avoided. However, unidirectional pulses are almost equally sufficient in tensioning the muscles.

The pulsator unit essentially consists of two parts which are firstly a switching circuit to control the high voltage and secondly a low voltage timing circuit.

The Switching Circuit.

Half wave pulses from the 180 volt transformer $T_1$ are allowed to flow through the carcass A via electrodes 10 and 11 each time the Triac $S_1$ (solid state a.c. switch) is turned on by gate trigger pulses from the timing circuit. The Triac $S_1$ automatically turns itself off at the end of each half wave when the voltage across it is reversed. Gate trigger pulses arrive from the timing circuit at the beginning of every seventh half wave, passing alternating pulses at 14.28 pulses per second through the carcass.

The Timing Circuit.

Transformer $T_2$ through recifier $B_2$ supplies unfiltered d.c. at 30 volts to the discharge capacitor $C_8$, and 15 volts smoothed d.c. to drive the integrated circuits. Recifier $B_1$ provides 30 V peak half wave pulses for the timing circuit at 100 Hz, ($TP_1$ - test point 1) in synchronization with the mains supply. These pulses are clipped at 15 volts by the zener diode Z1, ($TP_2$) and buffered against line noise by the transitor $Tr_1$ before being passed to the monostable at $TP_3$. This first monostable squares the 100 Hz pulses for the 4017 counter and allows for any difference in phase shift between transformer $T_1$ and transformer $T_2$.

The 4017 counter is wired to reset itself to zero after seven counts, effectively dividing the incoming 100 Hz pulses at $TP_4$ by seven, giving pulses at 14.28 Hz at $TP_5$. These pulses are reduced in width by the second monostable

0021198

- 4 -

($\frac{1}{2}$ CD4098) to control the time capacitor $C_8$ remains discharged. The pulses from the monostable pass through a buffer-driver (4050) and switch on transistor $Tr_2$ for approximately 2 m secs, discharging the capacitor $C_8$ through the primary of the transformer $T_3$. This gives secondary pulses to the gate of the Triac, switching the Triac on at the beginning of every 7th half cycle of the voltage from stimulation transformer $T_1$.

The 14.28 pulses per second frequency is not the only one which can be employed with success. The frequency of the pulses can lie in the range of 5 to 30 pulses per second. The 14.28 pulses per second frequency is preferred as it is simply derived from 50 Hz main supply by selecting every seventh pulse. Other systems can be used with effect, for example advantages can occur from using a potential difference of 180V with the pulse waveform.

The pulsed current produces the required tension in the carcass muscles but provides an increase over the duration for which tension is maintained by conventional methods. This increase is in the order of four to five times the duration. As a result of the increased duration of the carcass stiffness the incidence of dislocated or broken vertebrae is reduced considerably. The process of this invention can be employed with a wide variety of mechanical hide removal devices and methods with minimum interference.

The following example illustrates the effectiveness of the present invention when used in the mechanical hide pulling of beef carcasses.

A number of beef carcasses had the hides pulled therefrom by a mechanical puller in the absence of any electrical stimulation of the muscles. Approximately 72% of the carcasses revealed dislocated vertebrae. A further batch of carcasses then had their hides removed but with 180V 50 Hz stimulation to stiffen the backs during hide removal. The number of carcasses having dislocated vertebrae was reduced

0021198

- 5 -

to 25%. Finally a batch of carcasses had the hides stripped
therefrom and were processed according to the invention by
using a pulsed current at 14.28 pulses per second of
alternating waveform. The incidence of dislocated vertebrae
was less than 0.05%.

1.     A hide pulling process in which a carcass (A) is supported and the hide mechanically pulled therefrom, said carcass (A) being contacted during the pulling of the hide by a pair of spaced apart electrodes (10,11) characterised in that a pulsed electric current is passed between the electrodes.

2.     A hide pulling process according to Claim 1, wherein the pulsed electric current lies in the range of 5-30 pulses per second.

3.     A hide pulling process according to Claim 1 or 2, wherein alternate pulses of the current are reversed in polarity.

4.     A hide pulling process according to Claim 3, wherein the pulsed current is of substantially 14.28 pulses per second and is derived from a 50 Hz mains supply.

5.     A hide pulling process according to Claim 3, wherein the pulsed current is of substantianny 17.14 pulses per second and is derived from a 60 Hz mains supply.

6.     A hide pulling process according to Claim 1 or 2, wherein pulses of the mains supply are counted and predetermined half waves are selected and passed to said electrodes.

7.     In a hide pulling process in which a carcass is supported and the hide mechanically pulled therefrom, said carcass (A) being contacted during the pulling of the hide by a pair of spaced apart electrodes (10,11), a pulsator unit supplying a pulsed electric current to said electrodes.

8.      A pulsator unit as claimed in Claim 7, wherein the pulsator consists of a switching circuit to control high input voltage, said switching circuit being coupled to said electrodes (10,11) and a low voltage timing circuit which supplies gate trigger pulses to a switching device ($S_1$) in said high voltage switching circuit.

9.      A pulsator unit as claimed in Claim 8, wherein said switching device ($S_1$) is a triac coupled in series with a mains transformer ($T_1$) and said electrodes (10,11).

10.      A pulsator unit as claimed in Claim 8 or 9, wherein the timing circuit comprises a transformer ($T_2$) coupled to the mains supply, rectifier means ($B_2$) which provides half wave pulses, means ($B_1$) to synchronize said half wave pulses with said mains supply, counter means which counts a predetermined number of said half wave pulses, a discharge capacitor ($C_8$) coupled to said transformer ($T_2$) via rectifier means ($B_2$), driver means which passes the pulses derived from said counter means to a transistor ($Tr_2$) to discharge said discharge capacitor ($C_8$) through a transformer ($T_3$) coupled in parallel to said capacitor ($C_8$) to supply said gate trigger pulses to said switching means ($S_1$) of said switching circuit.

11.      A hide pulling process substantially as herein described.

12.      In a hide pulling a pulsator unit substantially as herein described with reference to the accompanying drawing.

Europ. Anm. Nr. 80 0021198
The Meat Industry Research Institute
of New Zealand, Inc.